(19) Europäisches Patentamt / European Patent Office / Office européen des brevets

(11) **EP 4 410 920 A1**

(12) **EUROPEAN PATENT APPLICATION**
published in accordance with Art. 153(4) EPC

(43) Date of publication:
**07.08.2024 Bulletin 2024/32**

(21) Application number: **22876177.1**

(22) Date of filing: **27.09.2022**

(51) International Patent Classification (IPC):
**C09J 123/06** (2006.01)  **G03G 9/08** (2006.01)
**G03G 9/097** (2006.01)  **G03G 15/24** (2006.01)

(52) Cooperative Patent Classification (CPC):
**C09J 123/06; G03G 9/08; G03G 9/097; G03G 15/24**

(86) International application number:
**PCT/JP2022/035835**

(87) International publication number:
**WO 2023/054311 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021160246**
　　　　　　 **16.09.2022 JP 2022147741**

(71) Applicant: **CANON KABUSHIKI KAISHA**
**Tokyo 146-8501 (JP)**

(72) Inventors:
• **TODA Atsushi**
**Tokyo 146-8501 (JP)**
• **MATSUDA Kohei**
**Tokyo 146-8501 (JP)**
• **KAWATA Kentaro**
**Tokyo 146-8501 (JP)**
• **WATANABE Taku**
**Tokyo 146-8501 (JP)**
• **SATO Shun**
**Tokyo 146-8501 (JP)**
• **SASAKI Hiraku**
**Tokyo 146-8501 (JP)**

(74) Representative: **TBK**
**Bavariaring 4-6**
**80336 München (DE)**

(54) **METHOD FOR PRODUCING CRIMPED SHEET AND IMAGE FORMING APPARATUS**

(57) The present invention provides a press-bonded sheet manufacturing method and an image forming apparatus capable of suppressing the occurrence of peeling offset when opening crimped postcards while using an image forming apparatus capable of performing printing and press-bonding processes in a series of flows.

The present invention relates to a method for manufacturing a press-bonded sheet in which sheet portions are press-bonded in a peelable state includes: a step of forming a composite layer by laminating an adhesive layer formed using a powder adhesive as a surface layer on a toner image formed using a printing toner on a sheet; a fixing step of heating the composite layer formed on the sheet to fix it to the sheet; a step of superimposing by opposing an area of the sheet where the composite layer is fixed and an area of the same sheet or a different sheet where another composite layer is fixed; and a press-bonding step of press-bonding the superimposed sheets under heat, wherein a difference in solubility parameter (SP value) between the printing toner and the powder adhesive is 1.0 $(\text{cal/cm}^3)^{1/2}$ or more.

**Description**

[Technical Field]

The present invention relates to a method for producing a crimped sheet (or manufacturing a press-bonded sheet) such as crimped postcards, and an image forming apparatus having means for manufacturing a press-bonded sheet.

[Background Art]

Crimped postcards that seal confidential contents such as invoices and payroll statements require a predetermined adhesion strength so that they do not peel off during delivery, while at the same time it is an important element that they can be easily peeled off when they arrive at the user's location to open them.

In addition, printers that create the above crimped postcards are highly convenient, from the viewpoint of simplicity and space saving, because they have a simple configuration that allows printing characters and images on a paper medium (hereinafter referred to as paper) and then conveying the paper as is, folding it and press-bonding it to create a crimped postcard.

Such a printer configuration desirably has a process cartridge filled with a developer (hereinafter referred to as toner) for printing and a process cartridge filled with a powder adhesive (hereinafter referred to as paste) for press-bonding, mounted in the same printer body, and is capable of printing in accordance with a conventional electrophotographic image forming process and also of bonding by additionally being provided with a folding unit and a press-bonding unit, thus having a simple configuration.

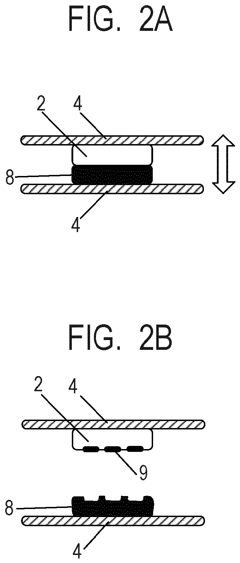

However, there are also problems that occur in performing a series of image forming processes by using two different types of powders. Specifically, if physical properties and conditions of the toner and the paste are not properly adjusted, they may be compatible or mixed with each other, and when opening a crimped postcard in which the paste 2 and the toner 8 are press-bonded by a folded sheet 4 as shown in FIG. 2A, the toner 8 printed on the sheet 4 may peel off together with the paste 2, and cause such a phenomenon that the transferred toner is reflected in the white background area of the facing surface (hereinafter referred to as peeling offset), as shown in FIG. 2B.

Patent Literature 1 clearly states that a hydrocarbon resin (polyethylene, etc.) is suitable as a material for the paste.

[Citation List]

[Patent Literature]

PTL 1: Japanese Patent Application Laid-Open No. 2007-45861

[Summary of Invention]

[Technical Problem]

However, with regard to the problem of peeling offset mentioned above, only selection of the paste as in Patent Literature 1 is insufficient for the manufacture of crimped postcards and for printers where printing and press-bonding processes are performed in a series of steps. It is necessary to select the materials, types, forms, etc. for not only the paste but also including the toner, based on their physical properties required.

Therefore, in view of the above situation, an object of the present invention is to propose an effective press-bonded sheet manufacturing method and an image forming apparatus capable of suppressing the occurrence of peeling offset when opening a crimped postcard while using an image forming apparatus capable of performing printing and press-bonding processes in a series of steps.

[Solution to Problem]

The above object is achieved by adopting the following constitution.

That is, the present invention relates to a method for manufacturing a press-bonded sheet in which sheet portions are press-bonded in a peelable state, comprising:

a step of forming a composite layer by laminating an adhesive layer formed using a powder adhesive as a surface layer on a toner image formed using a printing toner on a sheet;

a fixing step of heating the composite layer formed on the sheet to fix it to the sheet;
a step of superimposing by opposing an area of the sheet where the composite layer is fixed and an area of the same sheet or a different sheet where another composite layer is fixed; and
a press-bonding step of press-bonding the superimposed portion of the composite layer and the other composite layer by pressing under heat,
wherein a difference in solubility parameter (SP value) between the printing toner and the powder adhesive is 1.0 $(\text{cal/cm}^3)^{1/2}$ or more.

The present invention also relates to an image forming apparatus for manufacturing a press-bonded sheet in which sheet portions are press-bonded in a peelable state, comprising:

means for forming a composite layer by laminating an adhesive layer formed using a powder adhesive as a surface layer on a toner image formed using a printing toner on a sheet;
fixing means for heating the composite layer formed on the sheet to fix it to the sheet;
means for superimposing by opposing an area of the sheet where the composite layer is fixed and an area of the same sheet or a different sheet where another composite layer is fixed; and
press-bonding means for press-bonding the superimposed portion of the composite layer and the other composite layer by pressing under heat,
wherein a difference in solubility parameter (SP value) between the printing toner and the powder adhesive is 1.0 $(\text{cal/cm}^3)^{1/2}$ or more.

The present invention also relates to a method for manufacturing a press-bonded sheet in which sheet portions are press-bonded in a peelable state, comprising:

a step of forming a composite layer by laminating an adhesive layer formed using a powder adhesive as a surface layer on a toner image formed using a printing toner on a sheet;
a fixing step of heating the composite layer formed on the sheet to fix it to the sheet;
a step of superimposing by opposing an area of the sheet where the composite layer is fixed and an area of the same sheet or a different sheet where another composite layer is fixed; and
a press-bonding step of press-bonding the superimposed portion of the composite layer and the other composite layer by pressing under heat,
wherein the printing toner contains wax,
when a storage elastic modulus of the printing toner at a temperature in the fixing step is defined as G'(A1), a storage elastic modulus of the printing toner at a temperature in the press-bonding step is defined as G'(A2), a storage elastic modulus of the powder adhesive at a temperature in the fixing step is defined as G'(B 1), and a storage elastic modulus of the powder adhesive at a temperature in the press-bonding step is defined as G'(B2), the following relation is satisfied:

$$G'(A1) > G'(A2)$$

$$G'(B1) > G'(B2)$$

$$G'(B1) > G'(A1),$$

and
the temperature in the fixing step is a temperature between a starting onset temperature and an ending onset temperature of a change region caused by melting in a storage elastic modulus curve of the powder adhesive.

The present invention also relates to a method for manufacturing a press-bonded sheet in which sheet portions are press-bonded in a peelable state, comprising:

a step of forming a composite layer by laminating an adhesive layer formed using a powder adhesive as a surface layer on a toner image formed using a printing toner on a sheet;
a fixing step of heating the composite layer formed on the sheet to fix it to the sheet;
a step of superimposing by opposing an area of the sheet where the composite layer is fixed and an area of the same sheet or a different sheet where another composite layer is fixed; and

a press-bonding step of press-bonding the superimposed portion of the composite layer and the other composite layer by pressing under heat,

wherein a difference in average particle diameter between the printing toner and the powder adhesive is smaller than 25 $\mu$m, and the powder adhesive has a wider particle size distribution, or a larger half width, than the printing toner.

Furthermore, the present invention relates to an image forming apparatus for manufacturing a press-bonded sheet in which sheet portions are press-bonded in a peelable state, comprising:

means for forming a composite layer by laminating an adhesive layer formed using a powder adhesive as a surface layer on a toner image formed using a printing toner on a sheet;

fixing means for heating the composite layer formed on the sheet to fix it to the sheet;

means for superimposing by opposing an area of the sheet where the composite layer is fixed and an area of the same sheet or a different sheet where another composite layer is fixed; and

press-bonding means for press-bonding the superimposed portion of the composite layer and the other composite layer by pressing under heat,

wherein a difference in average particle diameter between the printing toner and the powder adhesive is smaller than 25 $\mu$m, and the powder adhesive has a wider particle size distribution, or a larger half width, than the printing toner.

[Advantageous Effects of Invention]

By adopting the constitution of the present invention, it is possible to make the printing toner and the powder adhesive (paste) less compatible or less mixable with each other in an image forming apparatus capable of performing printing and press-bonding processes in a series of steps. Thereby, the occurrence of peeling offset when opening a crimped postcard is suppressed.

[Brief Description of Drawings]

[FIG. 1]

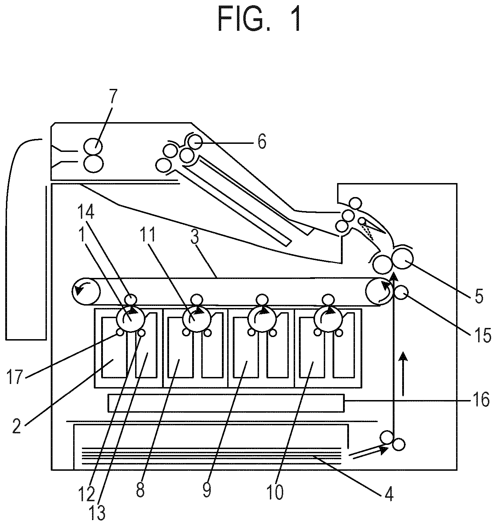

FIG. 1 is a schematic diagram showing an example of the image forming apparatus according to the present invention.
[FIG. 2A]
FIG. 2A is a diagram for explaining the peeling offset phenomenon.
[FIG. 2B]
FIG. 2B is a diagram for explaining the peeling offset phenomenon.
[FIG. 3]

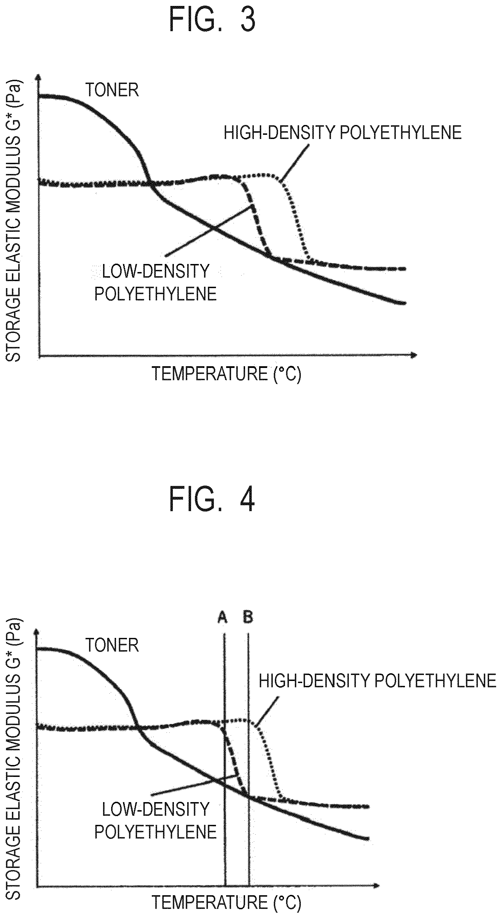

FIG. 3 is an explanatory diagram showing viscoelastic characteristics in the examples and comparative examples of the present invention.
[FIG. 4]
FIG. 4 is an explanatory diagram showing viscoelastic characteristics in the examples and comparative examples of the present invention, together with temperatures during fixing and press-bonding.
[FIG. 5]

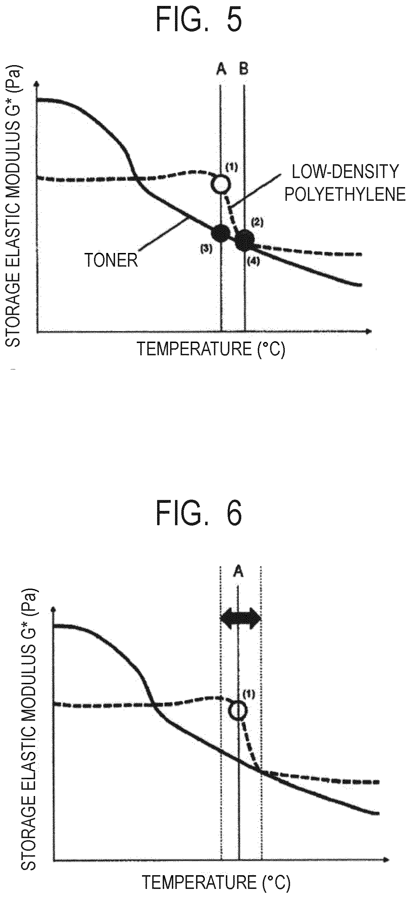

FIG. 5 is an explanatory diagram showing temperatures and viscoelastic characteristics during fixing and press-bonding of the developer (toner) and powder adhesive (paste) in an example of the present invention.
[FIG. 6]
FIG. 6 is an explanatory diagram showing temperatures and viscoelastic characteristics during fixing of the powder adhesive (paste) in an example of the present invention.
[FIG. 7]

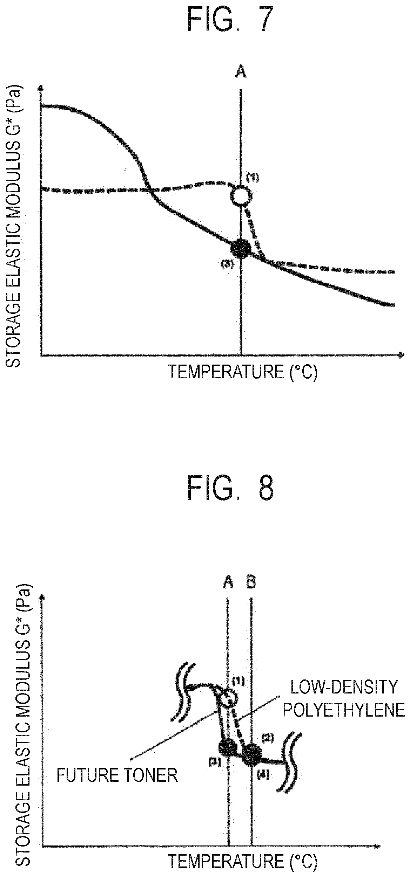

FIG. 7 is an explanatory diagram showing temperatures and viscoelastic characteristics during fixing of the developer (toner) and powder adhesive (paste) in an example of the present invention.
[FIG. 8]
FIG. 8 is an explanatory diagram showing temperatures and viscoelastic characteristics during fixing and press-bonding of the future developer (toner) and the powder adhesive (paste) in an example of the present invention, and viscoelastic characteristics of the future developer (toner).
[FIG. 9A]

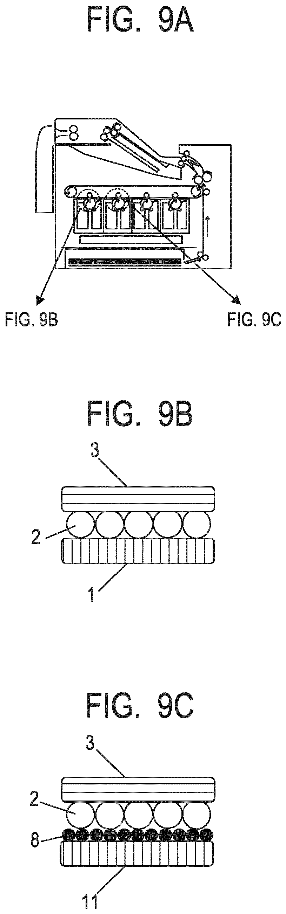

FIG. 9A is a schematic diagram showing an example of the image forming apparatus according to the present invention.

[FIG. 9B]

FIG. 9B is a schematic diagram showing a contact state between the image bearing member (drum) and the intermediate transfer belt (ITB) at the 1st station of the image forming apparatus shown in FIG. 9A.

[FIG. 9C]

FIG. 9C is a schematic diagram showing a contact state between the image bearing member (drum) and the intermediate transfer belt (ITB) at the 2nd station of the image forming apparatus shown in FIG. 9A.

[FIG. 10A]

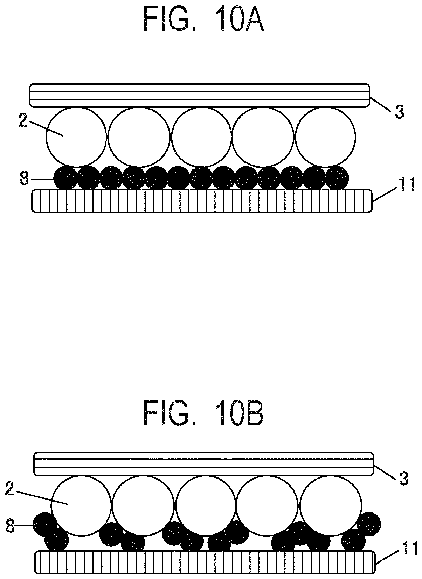

FIG. 10A is a schematic diagram showing a state immediately before contact between the image bearing member (drum) and the intermediate transfer belt (ITB) at the 2nd station in the case where there is a difference in average particle diameter in the example of the present invention.

[FIG. 10B]

FIG. 10B is a schematic diagram showing a state immediately after contact between the image bearing member (drum) and the intermediate transfer belt (ITB) at the 2nd station in the case where there is a difference in average particle diameter in the example of the present invention.

[FIG. 11A]

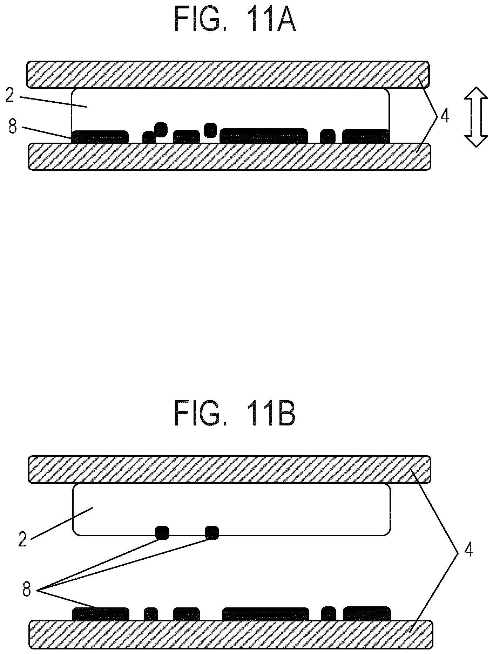

FIG. 11A is a schematic diagram showing a state before peeling of the crimped postcard when there is a difference in average particle diameter in the example of the present invention.

[FIG. 11B]

FIG. 11B is a schematic diagram showing a state after peeling of the crimped postcard when there is a difference in average particle diameter in the example of the present invention.

[FIG. 12A]

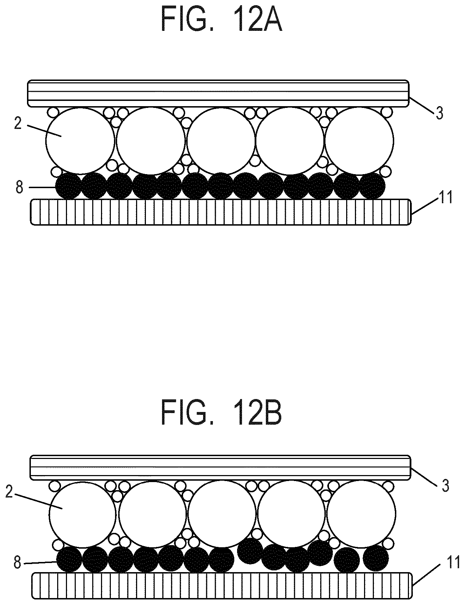

FIG. 12A is a schematic diagram showing a state immediately before contact between the image bearing member (drum) and the intermediate transfer belt (ITB) at the 2nd station when there is a difference in average particle diameter with a wider particle size distribution in the example of the present invention.

[FIG. 12B]

FIG. 12B is a schematic diagram showing a state immediately after contact between the image bearing member (drum) and the intermediate transfer belt (ITB) at the 2nd station when there is a difference in average particle diameter with a wider particle size distribution in the example of the present invention.

[FIG. 13A]

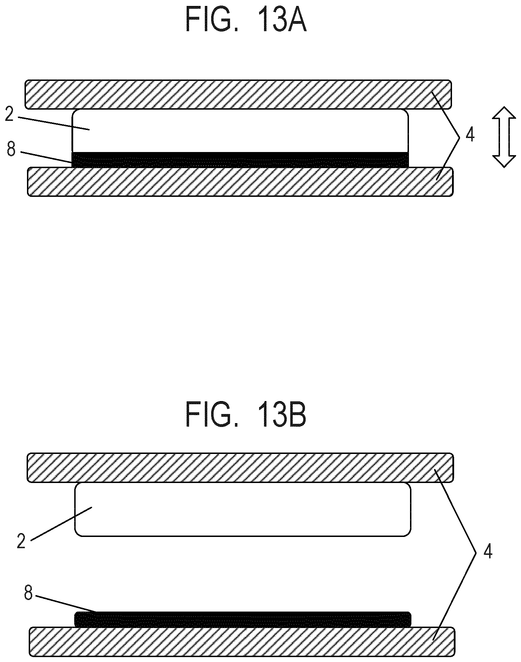

FIG. 13A is a schematic diagram showing a state before peeling of the crimped postcard when there is a difference in average particle diameter with a wider particle size distribution in the example of the present invention.

[FIG. 13B]

FIG. 13B is a schematic diagram showing a state after peeling of the crimped postcard when there is a difference in average particle diameter with a wider particle size distribution in the example of the present invention.

[FIG. 14A]

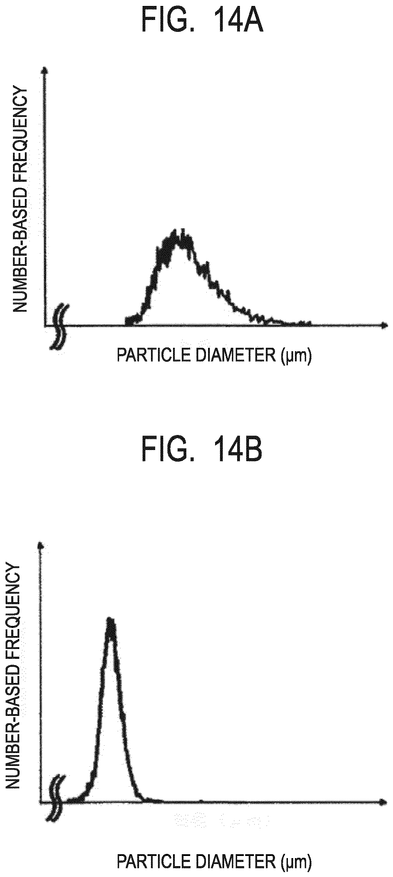

FIG. 14A is a diagram showing the average particle diameter and particle size distribution in the example of the present invention.

[FIG. 14B]

FIG. 14B is a diagram showing the average particle diameter and particle size distribution in the example of the present invention.

[FIG. 15A]

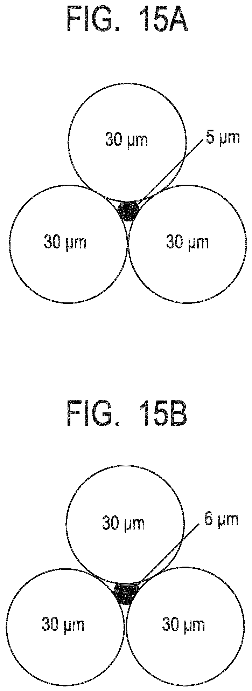

FIG. 15A is a schematic diagram showing gaps between particles of the developer (toner) and powder adhesive (paste) in the example of the present invention.

[FIG. 15B]

FIG. 15B is a schematic diagram showing gaps between particles of the developer (toner) and powder adhesive (paste) in the example of the present invention.

[Description of Embodiments]

<Overview of the Apparatus>

The steps (or means) on which the press-bonded sheet manufacturing method and image forming apparatus according to the present invention are based for manufacturing a press-bonded sheet in which sheet portions are press-bonded in a peelable state are:

(i) a step of forming a composite layer by laminating an adhesive layer formed using a powder adhesive as a surface layer on a toner image formed using a printing toner on a sheet;

(ii) a fixing step of heating the composite layer formed on the sheet to fix it to the sheet;

(iii) a step of superimposing by opposing an area of the sheet where the composite layer is formed and fixed and an area of the same sheet or a different sheet where another composite layer is fixed; and

(iv) a press-bonding step of press-bonding the superimposed portion of the composite layer and the other composite layer by pressing under heat.

Here, in step (iii), when "different sheets" are superimposed, the operation of folding the sheet(s) is not necessarily involved, but when "sheet portions of the same sheet" are superimposed, the sheet will be folded. Therefore, the step (iii) above may be conveniently referred to as a "folding step," and the means for it may be referred to as "folding means" or "folding unit."

FIG. 1 is a schematic cross-sectional view showing an example of an image forming apparatus according to the present invention, which is based on a conventional full-color image forming apparatus with the addition of a folding unit 6 and a press-bonding unit 7.

Then, a process cartridge filled with paste 2 is mounted on the station located on the most upstream side of the four image forming stations, and process cartridges of yellow (hereinafter referred to as Y), magenta (hereinafter referred to as M), and cyan (hereinafter referred to as C) toners are mounted on the other stations. However, the configuration is not limited to the above. Specifically, the order and quantity ratio of the paste and toner color process cartridges mounted on each station can be optionally set according to needs, such as monochrome. It is noted here that the number of stations is not limited to four.

Next, the image forming process (charging, developing, transferring, fixing) for creating crimped postcards, as well as the flow of the folding process and the press-bonding process will be described in detail.

(Description of Image Forming Process, Folding Process, Press-bonding Process)

In the image forming apparatus of FIG. 1, an image bearing member (hereinafter referred to as a drum) 1 having an OPC photosensitive layer (organic photoconductor) is provided for each station, and is rotatable in the arrow direction at a predetermined process speed. After the surface of the drum 1 is charged to a predetermined polarity and potential by a charging roller 12 to which a charging bias is applied, an electrostatic latent image is formed by exposure to an exposure beam from a laser beam scanner 16. Then, the powder adhesive (hereinafter referred to as paste) 2 is carried from the developing container to the developing agent carrying member 17, and the paste 2 is transferred to the drum 1 by the developing means (contact charging and developing bias), that is, the electrostatic latent image is developed.

Next, the paste on the drum 1 is (primarily) transferred to an intermediate transfer belt (hereinafter referred to as ITB) 3 that is in contact with the drum by a predetermined transfer pressure and a transfer bias of the transfer roller 14, and the paste 2 on the ITB 3 is carried to the next station. A part of the paste 2 that has not been transferred on the drum 1 is scraped off by a cleaning blade or the like, and then the drum 1 can perform repeated image formation by being charged, exposed, and developed again. The scraped paste 2 is collected and recovered in the cleaning container 13. A configuration that can perform this series of processes (drum 1, charging roller 12, developing container 2, cleaning container 13) is integrated and cartridged, which is called a process cartridge. Four process cartridges containing different powders are arranged side by side and housed in the main body.

In the next station, in the same manner as described above, the Y toner (yellow toner) 8 is now transferred from the drum 1 1 to the ITB. Then, as transfer is sequentially repeated in the subsequent stations, at least two layers of powders (paste and one color toner other than paste, up to paste, Y toner 8, M toner (magenta toner) 9, and C toner (cyan toner) 10) are sequentially stacked on the ITB. Then, the toner image is (secondarily) transferred from the ITB 3 to the conveyed recording material (hereinafter referred to as paper) 4 by the transfer bias of the secondary transfer roller 15. As a result, the stacking order on the paper 4 is reversed from that on the ITB 3, and a composite layer having a paste as a surface layer is formed on the toner image, thereby making it easy to stack and press-bond the sheet portions facing each other with paste. Therefore, in an apparatus using an intermediate transfer member such as an intermediate transfer belt, it is desirable to place the paste in the most upstream station in image formation.

Then, the paste is heated and pressurized by the fixing unit 5 to melt and fix on the paper 4 together with the toners 8, 9, and 10. At this time, it is important that most of the paste 2 is fixed in an appropriately softened state while melting. This is because if the toners 8, 9, 10 and the paste 2 are completely melted at the time of fixing, they become easily compatible and the peeling offset property decreases, and as in the following examples, the present invention makes ingenuity.

Next, the paper is sent to the folding unit 6, folded there into a predetermined state, and then pressurized and heated by the press-bonding unit 7 to create a crimped postcard. It is important to perform this press-bonding at a temperature condition where the paste melts in order to maintain the adhesive strength of the crimped postcard while suppressing peeling offset.

The reason why the paste and toner are not melted at once during fixing but both are melted during press-bonding is as follows. The reason is that by fixing the paste by softening to the extent that it does not completely melt during fixing, the heat conduction to the paste becomes duller than that to the toner during press-bonding. Then, it is considered that a difference occurs in the ease of melting between them, making it possible to make a situation where both are less compatible at their interface, or the toner layer once melted during fixing allows wax to exist on the surface and this serves as a wall that makes the toner layer less compatible with the paste, making both less compatible.

<Explanation of Peeling Offset and Factors>

The crimped postcard created through the above steps is opened after arriving at the user. However, as described above, depending on the physical properties and conditions of the toner and paste, peeling offset may occur.
As a result of studying the molten state and compatibility of the printing toner and paste, the inventors have found that good peelability can be obtained by controlling either

1. Difference in solubility parameter (SP value) between toner and paste
2. Difference in viscoelastic characteristics between toner and paste.

In addition, as a result of studying the powder characteristics of the toner and paste, it was found that good peelability can be obtained by controlling 3. Difference in average particle diameter and particle size distribution between toner and paste.
Hereinafter, the three control points will be described in order.

(Regarding Toner and Paste)

Before explaining the three items contributing to the above-mentioned peeling offset, the toner and paste used in the present invention will be described first.
The toner used in the present invention contains a thermoplastic binder resin such as a styrene acrylic resin, a polyester resin, a vinyl resin, or an acrylic resin, and further contains wax, colorant, external additive, charge control agent, magnetic material, etc. as needed. The shape of individual toner particles is spherical or irregular, and the average particle diameter is about 6 $\mu$m $\pm$ 2 $\mu$m. However, the material and physical properties are not limited to the above. In particular, in order to suppress the occurrence of peeling offset, the material and physical properties (structure) of the toner may be changed to match the material and physical properties of the paste, and those having different SP values, viscoelastic characteristics, average particle diameters, and particle size distributions may be used.
On the other hand, polyethylene powder particles are preferably used for the paste. Polyethylene powder particles can be produced by polymerization method or pulverization method, and external additives etc. may be added to the surface. The shape of individual particles is spherical or irregular, and the average particle diameter is about 6 to 30 $\mu$m. However, the material and physical properties are not limited to the above. In particular, in order to suppress the occurrence of peeling offset, the material and physical properties (structure) of the paste may be changed to match the material and physical properties of the toner, and those having different SP values, viscoelastic characteristics, average particle diameters, and particle size distributions may be used.

[Example 1] (1. Regarding difference in solubility parameter (SP value) between toner and paste)

As described above, the level of occurrence of peeling offset differs depending on the compatibility and degree of mixing between the toner and paste. Therefore, it is necessary to perform image formation in a state where the toner and paste are less compatible or less mixable, and create a crimped postcard.
Therefore, we focused on the SP value, which is an index representing the compatibility of two types of materials. This SP value is a value indicating the solubility of the two substances of interest and is a unique value determined by the material and molecular structure. In addition, it has the feature that if the SP values of two different substances are separated from each other, they are less compatible, and if the SP values are close, they are more compatible. Next, the method of calculating the SP value will be described.

(Calculation method of solubility parameter (SP value))

The SP value in the present invention was determined using the following Fedors equation. For the values of $\Delta$ei and $\Delta$vi here, the present inventors referred to the evaporation energy and molar volume (25°C) of atoms and atomic groups in Tables 3 to 9 on pages 54 to 57 of "Coating no Kiso Kagaku (Fundamentals of Coating Science)," 1986 (Maki Shoten Publishing). Ev is evaporation energy, V is molar volume, $\Delta$ei is evaporation energy of atom or atomic group of

component i, and $\Delta vi$ is molar volume of atom or atomic group of component i. For example, in the case of a substance called hexanediol, it consists of an atomic group $(-OH) \times 2 + (-CH_2) \times 6$, and the SP value is obtained by the following formula as an example, and the SP value ($\delta i$) is 11.95.

$$\text{SP value calculation formula } \delta i = [Ev/V]^{1/2} = [\Delta ei/\Delta vi]^{1/2}$$

SP value of hexanediol $\delta i = [\Delta ei / \Delta vi]^{1/2} = [\{(5220) \times 2 + (1180) \times 6\} / \{(13) \times 2 + (16.1) \times 6\}]^{1/2} = 11.95$     Example)

In this specification, the unit of SP value is $(cal/cm^3)^{1/2}$, where $(cal/cm^3)^{1/2} = 0.48888 \times (J/cm^3)^{1/2}$.

In the present specification, the SP value of the toner is adopted as the SP value of the binder resin.

In the present example, the following formulation toner was used. Toners having different resins shown in Table 1 below were obtained by changing the binder resin. Note that "parts" means "parts by mass."

(Manufacture example of printing toner)

Next, a manufacture method of printing toners Ty, Tm, Tc will be exemplified. First, the following materials were prepared.

| | |
|---|---|
| Styrene | 60.0 parts |
| Colorant | 6.5 parts |

(C.I. Pigment Blue 15:3, manufactured by Dainichiseika Color & Chemicals Mfg. Co., Ltd.)

The above materials were charged into an Attritor (manufactured by Mitsui Miike Machinery Co., Ltd.), and further dispersed for 5 hours at 220 rpm using zirconia particles having a diameter of 1.7 mm to obtain a pigment dispersion.

In addition, the following materials were prepared.

| | |
|---|---|
| Styrene | 15.0 parts |
| n-butyl acrylate | 25.0 parts |
| Polyester resin | 4.0 parts |

(Weight average molecular weight (Mw) 20,000, glass transition temperature (Tg) 75°C, acid value 8.2 mg KOH/g)

| | |
|---|---|
| Behenyl behenate | 12.0 parts |
| Divinylbenzene | 0.5 parts |

The above materials were mixed and added to the pigment dispersion. The resulting mixture was kept at 60°C, stirred at 500rpm using a T.K. Homomixer (manufactured by Tokushu Kika Kogyo Co., Ltd.) to uniformly dissolve and disperse, and a polymerizable monomer composition was prepared.

On the other hand, 850.0 parts of a 0.10 mol / L-$Na_3PO_4$ aqueous solution and 8.0 parts of 10% hydrochloric acid were added to a container equipped with a high-speed stirrer Clearmix (manufactured by M Technique Co., Ltd.) and the rotation speed was adjusted to 15000 rpm and heated to 70°C. To this was added 127.5 parts of a 1.0 mol / L-$CaCl_2$ aqueous solution to prepare an aqueous medium containing a calcium phosphate compound.

After charging the polymerizable monomer composition into the aqueous medium, 7.0 parts of t-butyl peroxypivalate, a polymerization initiator, was added, granulated for 10 minutes while maintaining a rotation speed of 15000 rpm, then changed the stirrer from a high speed stirrer to a propeller stirrer, refluxed at 70°C for 5 hours, then set the liquid temperature to 85°C and further reacted for 2 hours.

After completion of the polymerization reaction, the resulting slurry was cooled, hydrochloric acid was further added to the slurry to adjust the pH to 1.4, and stirred for 1 hour to dissolve the calcium phosphate salt. Thereafter, the slurry was washed with 3 times the amount of water, filtered, dried, classified to obtain toner particles.

Then, with respect to 100.0 parts of the toner particles, 2.0 parts of silica fine particles (number average particle diameter of primary particles: 10 nm, BET specific surface area: 170 $m^2/g$) subjected to hydrophobic treatment with dimethyl silicone oil (20% by mass) was added as an external additive. The toner particles containing the silica fine particles were mixed using a Mitsui Henschel Mixer (manufactured by Mitsui Miike Machinery Co., Ltd.) at 3000 rpm for 15 minutes to obtain toner (printing toner). The obtained toner had a weight average particle diameter of about 6 μm.

Next, in order to investigate the compatibility between these toners and paste (powder adhesive), a plurality of pastes having different resin species as shown in Table 1 were used to perform the above-described image forming process, and the following test samples of crimped postcards were created to confirm peeling offset.

The test samples were prepared by printing paste and any one color of Y, M, and C toners on the entire surface of the inner surface 3 cm × 4 cm area of the strip (3 cm × 14 cm) of paper (GF-C081 manufactured by Canon) instead of the crimped postcard, and by printing only paste on the entire surface; the printed surfaces thereof were overlapped with each other facing inward, and fixing and press-bonding were performed to create each sample. In this case, the image forming process conditions (applied biases, settings of each component, temperature conditions, etc.) were performed under almost the same conditions for paste and toner, but may be set individually for each powder. In the test described later, the fixing temperature and the press-bonding temperature were raised to perform fixing and press-bonding in the test using high-density polyethylene for the paste.

The peeling test was performed using a TENSELON tensile tester manufactured by ORIENTEC, MODEL: RTG-1255. The both ends of the strip were clamped to the tester and peeled off at a tensile speed of 50 mm/min.

The presence or absence of peeling offset was determined by checking the peeled surface of the strip peeled off with TENSILON and determining whether or not the toner had been transferred to the strip side printed only with paste. The results are explained below using Table 1.

As shown in Table 1, when a polyester resin was used for both the toner and the paste, the materials are the same, so that the SP value is 9.30 for both. When a test sample was prepared in this state and a peeling test was performed, the peeled surfaces were compatible with each other, did not separate well, and peeling offset occurred. It was also confirmed that peeling offset occurred due to compatibility when both the toner and the paste have the same styrene acrylic resin.

Next, a peeling test was performed by changing the toner to a polyester resin and the paste to a polypropylene resin having a similar SP value. As a result, it was confirmed that the toner and the paste were compatible and did not separate well. Therefore, it can be seen that the ease of compatibility depends on the closeness of SP values, not the material.

Next, the case where the difference in SP value is large will be described. This time, the same test was conducted using two types of polyethylene having different structures, low-density polyethylene and high-density polyethylene, as the paste. The SP value of low-density polyethylene was 7.93 (the difference in SP value from the polyester contained in the toner was 1.37), and the SP value of high-density polyethylene was 8.29 (the difference in SP value from the polyester contained in the toner was 1.01). As a result, it was found that the separation surface did not compatibilize and the peeled surface was cleanly separated, smooth, and glossy with both polyethylenes. Therefore, it was found that mutual compatibility can be suppressed if the difference in SP value is at least 1.0. In addition, low-density polyethylene is preferable to high-density polyethylene in that image formation is possible under almost the same process conditions as the toner.

Table 1]

| Toner | Paste | SP Value Difference | Peeling Offset |
|---|---|---|---|
| Polyester Resin (9.30) | Polyester Resin (9.30) | 0.00 | Occurred |
| Styrene Acrylic Resin (9.40) | Styrene Acrylic Resin (9.40) | 0.00 | Occurred |
| Polyester Resin (9.30) | Polypropylene Resin (9.30) | 0.00 | Occurred |
| Polyester Resin (9.30) | Low-Density Polyethylene (7.93) | 1.37 | Not Occurred |
| Polyester Resin (9.30) | High-Density Polyethylene (8.29) | 1.01 | Not Occurred |

The above are the test results regarding the SP value, but next, model experiments to investigate peeling offset under conditions outside the normal use range were conducted while changing the combination of the materials of the toner and paste. The purpose of conducting this model experiment is twofold.

The first purpose is to investigate whether compatibility can be suppressed even if the difference in SP value is less than 1.0, that is, how much margin there is, for example, whether 1.0 is the optimum value, and the second purpose is that the threshold of 1.0 for the SP value difference is established. It is to examine whether it is a condition only in the combination of the polyester resin as the toner and the polyethylene resin as the paste, that is, whether the same result can be obtained in other combinations.

The model experiment will be described in detail. In this model experiment, the adhesion amount of the toner and paste on the above-mentioned strip was made non-uniform so as to easily cause peeling offset. By making the coating non-uniform, the toner is less likely to be connected to the surrounding toner when melted (the toner is more likely to be isolated), making it easier to peel off from the paper.

Therefore, in this model experiment, peeling offset deteriorates when the toner and paste have the same SP value. The results are shown in Table 2 below.

First, as shown in Table 2, when the toner was a polyester resin and the paste was low-density polyethylene and high-density polyethylene, when the above model experiment was conducted, peeling offset slightly occurred in the case of high-density polyethylene having an SP value difference of 1.01. On the other hand, peeling offset did not occur with low-density polyethylene having an SP value difference of 1.37.

Also, when the toner was a styrene acrylic resin and the paste was low-density polyethylene and high-density polyethylene, both the normal peeling offset test and the model experiment were conducted. The differences in SP values between the toner and paste were 1.47 and 1.11, respectively. When the normal peeling test and the model experiment were conducted under these conditions, it was found that peeling offset did not occur with both low-density polyethylene with an SP value difference of 1.47 and high-density polyethylene with an SP value difference of 1.11.

Therefore, it became clear that the difference in SP value for suppressing peeling offset was preferably 1.0 or more, and more preferably 1.1 or more.

[Table 2]

| Toner | Paste | SP Value Difference | Peeling Offset | Peeling Offset (Non-uniform Image) |
|---|---|---|---|---|
| Polyester Resin (9.30) | Polyester Resin (9.30) | 0.00 | Occurred | Occurred |
| Styrene Acrylic Resin (9.40) | Styrene Acrylic Resin (9.40) | 0.00 | Occurred | Occurred |
| Polyester Resin (9.30) | Polypropylene Resin (9.30) | 0.00 | Occurred | Occurred |
| Polyester Resin (9.30) | Low-Density Polyethylene (7.93) | 1.37 | Not Occurred | Not Occurred |
| Polyester Resin (9.30) | High-Density Polyethylene (8.29) | 1.01 | Not Occurred | Slightly Occurred |
| Styrene Acrylic Resin (9.40) | Low-Density Polyethylene (7.93) | 1.47 | Not Occurred | Not Occurred |
| Styrene Acrylic Resin (9.40) | High-Density Polyethylene (8.29) | 1.11 | Not Occurred | Not Occurred |

[Example 2] (2. Difference in viscoelastic characteristics between toner and paste)

Next, the viscoelastic characteristic, which is another factor of the peeling offset, will be described. The reason for focusing on this viscoelastic characteristic will be described later.

From the viewpoint of viscoelastic characteristics, the present invention needs to satisfy

$$G'(A1) > G'(A2)$$

$$G'(B1) > G'(B2)$$

$$G'(B1) > G'(A1),$$

where G'(A1) is the storage elastic modulus at the temperature in the toner fixing step, G'(A2) is the storage elastic modulus at the temperature in the toner press-bonding step, G'(B 1) is the storage elastic modulus at the temperature in the paste fixing step, and G'(B2) is the storage elastic modulus at the temperature in the paste press-bonding step. It is necessary that the temperature in the fixing step is a temperature between a starting onset temperature and an ending onset temperature of a change region caused by melting in a storage elastic modulus curve of the paste.

Here, the viscoelastic characteristic indicates the energy stored in the powder relative to the applied strain, and is represented by the storage elastic modulus with respect to temperature. In the case of powders such as thermoplastic resins as in the present example, when the toner or paste is heated and the temperature is raised, the viscoelastic characteristic changes and the storage elastic modulus decreases. This state indicates that the toner or paste has melted and softened (hereinafter referred to as softening).

If the paste is close to a single material state, the softening temperature is close to the melting point, so that the viscoelasticity tends to change sharply in the temperature region around that temperature. However, when multiple materials such as toner contain multiple materials, the regions where the viscoelasticity changes for each substance are different, so that there is a tendency that the region where rapid change occurs is small in number, and there is a feature that the viscoelasticity gradually changes according to the heating temperature. Next, a method for measuring the viscoelastic characteristics of the toner and paste will be described.

(Regarding measurement of viscoelastic characteristics and storage elastic modulus of toner and paste)

For the measurement of the viscoelastic characteristics, that is, storage elastic modulus, of the toner and paste, DMA8000 (manufactured by PerkinElmer, Inc.) and a compression fixture (product number: N533-0320) were used, and a heating furnace product number: N533-0267 was used for the measurement. First, as a measurement sample, under an environment at 25°C, toner or paste (about 2.0 g) was pressure molded (compressed and molded at about 10 MPa for about 60 seconds) into a disk shape having a diameter of 7.9 mm and a thickness of 2.0 ± 0.3 mm using a tablet molding machine (for example, NT-100H, manufactured by NPa SYSTEM CO., LTD.), and measured while heating to create a graph of storage elastic modulus versus heating temperature.

In the present example, the toner has the same composition, manufacture process, particle size, etc. as in Example 1 for the measurement of viscoelasticity.

That is, the binder resin of the toner was a styrene acrylic resin containing wax as a release agent, and polyethylene was used for the paste, but the materials of the toner and paste are not limited thereto. What is necessary is that the viscoelastic characteristics of the toner and the paste are those having different material qualities, and as long as the storage elastic modulus of the paste is higher than that of the toner at least at the fixing temperature, peeling offset can be suppressed, so that the materials of the toner and paste are not limited thereto.

FIG. 3 shows the results of viscoelasticity measurement. The horizontal axis indicates the temperature when the powder was heated under predetermined conditions, and the vertical axis indicates the storage elastic modulus of each powder at that time. The viscoelastic characteristics of the three powders showed the following tendencies.

The toner, shown by the solid line, is hard at low temperatures because it has a high storage elastic modulus. However, as the temperature rises, the storage elastic modulus gradually decreases, showing a tendency to soften almost linearly.

On the other hand, the paste shown by the broken line was softer than the toner before heating, but the storage elastic modulus hardly changed until a predetermined temperature, and it was seen to soften sharply at around the melting point.

However, polyethylene has low-density polyethylene and high-density polyethylene having different structures. Low-density polyethylene shown by the broken line has more branched structures than high-density polyethylene shown by the dotted line, so that it has a lower melting point. Therefore, it has the feature that it softens at a lower temperature, while high-density polyethylene has a higher melting point and softening temperature because its molecular structure is mainly linear.

(Regarding improvement of peeling offset due to viscoelastic characteristics)

As described above, the level of occurrence of peeling offset differs depending on the compatibility and degree of mixing between the toner and the paste. Therefore, it is necessary to perform image formation in a state where the toner and paste are less compatible or less mixable, and create a crimped postcard.

Therefore, we focused on the viscoelastic characteristic as an index representing the ease of softening of a substance. There are actually two heating timings, during fixing and during press-bonding, when creating a crimped postcard. By using the difference in viscoelasticity between the toner and paste at these two temperatures, we have found that peeling offset can be improved by creating a situation in which they are less compatible with each other. Therefore, the specific viscoelastic characteristics obtained this time will be described below.

FIG. 4 shows the actual paper temperature during fixing and the paper temperature during press-bonding (that is, the temperature of the toner and paste on the paper) added to FIG. 3. The paper temperature during fixing is indicated by a vertical solid line A, and the paper temperature during press-bonding is indicated by a vertical solid line B. In this example, the temperature during press-bonding B was set higher than that during fixing A.

The viscoelastic characteristics of each powder at the fixing time A will be described. At the fixing time A, the toner was almost melted, and the low-density polyethylene, which was the paste, was slightly melted. However, high-density polyethylene was hardly melted.

Next, the viscoelastic characteristics of each powder at the time B of press-bonding will be described. At the time B of press-bonding, although the toner and low-density polyethylene were almost melted, it was found that high-density polyethylene was not melted and fixed. In this example, since the paste was fixed at the same temperature setting as the toner, the paste used is desirably low-density polyethylene instead of high-density polyethylene, which is difficult to fix. Therefore, hereinafter, low-density polyethylene is used as the paste to explain how to suppress peeling offset.

FIG. 5 shows the storage elastic moduli of the toner and the paste (low-density polyethylene) at the fixing and press-bonding temperatures as black and white circles to facilitate explaining the relationship between the viscoelastic characteristics and the peeling offset. From FIG. 5, the fixing time of the paste is simply shown as (1), the press-bonding time of the paste as (2), the fixing time of the toner as (3), and the press-bonding time of the toner as (4) for easy understanding. It was also found that peeling offset suppression is improved in the following three states, which will be explained in order.

The first one is, as shown in FIG. 5, that in this example, the paper temperature during press-bonding is set higher than during fixing, so that the viscoelasticity is (1) > (2) and (3) > (4).

Second, as shown in FIG. 6, the paste does not need to completely melt during fixing, and since press-bonding is possible when the paste melts during press-bonding, (1) may be used in a state where it is slightly softened and starts to melt. That is, (1) only needs to be within the softening region in the viscoelastic characteristic.

The third is considered to be the most important condition for suppressing peeling offset, which is to satisfy the relationship of (1) > (3) at the fixing temperature A as shown in FIG. 7. Here, it is preferable that the difference between the storage elastic modulus of (1) and the storage elastic modulus of (3) at the fixing temperature A is $|Log10(1 \times 10^5)$ - $Log10(3 \times 10^4)|$ or more and $|Log10(3 \times 10^6)$ - $Log10(6 \times 10^4)|$ or less.

This is because it was found that if the viscoelastic characteristics of both the toner and paste are similar at the time of fixing and both powders melt at once, they become easily compatible and compatibilize to the extent that peeling offset occurs by the end of fixing. Therefore, in order to improve peeling offset, it is necessary to fix the paste in a state where it is slightly softened without completely melting during fixing. That is, by fixing the paste in a slightly softened state during fixing, the entire paste can be brought into a melted state during press-bonding for the first time. That is, peeling offset can be improved by making a state where both powders are not melted during fixing and are less compatible.

In addition, depending on the type of toner, by melting mainly the toner during fixing, a wax layer can be formed on the surface of the toner in a state not compatible with the paste, which becomes a toner wall that makes it difficult for them to be compatible during press-bonding, thereby suppressing compatibility.

Regarding the temperature and pressure conditions during the press-bonding process, if the temperature or pressure is quite high during the press-bonding process, peeling offset is likely to occur. Therefore, as conditions during press-bonding, it is desirable to perform press-bonding at a paper temperature of about 105°C to 115°C, a paper feed rate of 100 mm/s, and a pressure of 32 kg (load of 16 kg $\times$ 2 on one side).

From the above, in order to improve peeling offset due to viscoelastic characteristics, it suffices to satisfy the following relationships: the viscoelasticity of the paste during fixing > the viscoelasticity during press-bonding ((1) $\geq$ (2)), the viscoelasticity of the toner during fixing > during press-bonding ((3) $\geq$ (4)), and the viscoelasticity (1) of the paste during fixing being within the softening region in the viscoelastic characteristic, and the viscoelasticity of the paste $\geq$ the viscoelasticity of the toner ((1) $\geq$ (3)) during fixing.

Furthermore, we assumed a case where the slope of change (softening region slope) in the viscoelastic characteristic of the toner becomes steeper than that of the paste as the material development of the toner progresses in the future. The assumed situation is shown in FIG. 8.

The solid line in FIG. 8 shows the viscoelasticity of the toner, which is sharper melting (easier to soften) than the broken line paste. Even if trying to change the positional relationship between (3) and (4), since the toner itself melts during fixing, the position of (3) is inevitable, and it is expected that the positional relationship between (3) and (4) in FIG. 8 occurs. (The viscoelasticity becomes lower than (3) because it is a thermoplastic resin). That is, it was found that only the solid line part at a temperature lower than (3) changes, and the positional relationship between (1), (2), (3), and (4) does not change.

From the above, by maintaining the above relationship, the paste can be fixed in a slightly softened state during fixing, and the entire paste can be brought into a melted state during press-bonding for the first time. This makes it possible to prevent the toner and paste from melting at once during fixing, creating a situation that is less compatible and improving peeling offset.

In this example, the fixing temperature (paper temperature during fixing) was 95°C and the press-bonding temperature (paper temperature during press-bonding) was 105°C. Further, the storage elastic modulus of the paste at the fixing temperature was $3 \times 10^6$ Pa, the storage elastic modulus of the paste at the press-bonding temperature was $2 \times 10^4$ Pa, the storage elastic modulus of the toner at the fixing temperature was $6 \times 10^4$ Pa, and the storage elastic modulus of the toner at the press-bonding temperature was $2 \times 10^4$ Pa.

[Example 3] (3. Difference in average particle diameter and particle size distribution between toner and paste)

As described above, the level of occurrence of peeling offset varies depending on the compatibility and degree of mixing between the toner and the paste. Therefore, it is necessary to perform image formation in a state where the toner and the paste are less compatible or less likely to mix with each other, and create crimped postcards.

Therefore, we focused on the state where the toner and paste exist as powders before fixing and press-bonding, and thought that peeling offset could be suppressed by improving the mixing state between them.

When the average particle diameter and particle size distribution of the toner and paste were confirmed by shaking, no peeling offset occurred if a series of image forming processes was employed to create a crimped postcard, followed by peeling, in the case where the average particle diameter and particle size distribution of the toner and paste were the same. However, when the average particle diameter of the toner and the paste was different and the average particle diameter of the paste was about 25 $\mu$m larger than that of the toner, it was found that peeling offset occurred markedly. On the other hand, even if the average particle diameter of the paste is about 25 $\mu$m larger than that of the toner, if the particle size distribution is wide (that is, the half width of the particle size distribution is large), or if there are many particles having a smaller particle diameter than the average particle diameter of the paste, it was found that peeling offset suppression improved. The improvement mechanism will be described below, and the necessary conditions will be presented. The average particle diameter and particle size distribution were measured as follows.

(Regarding the measurement of average particle diameter and particle size distribution)

The average particle diameter and particle size distribution of the toner and paste, that is, the weight average particle diameter, are calculated as follows. As a measuring device, a precision particle size distribution measuring device "Coulter Counter Multisizer 3" (registered trademark, manufactured by Beckman Coulter, Inc.) equipped with an aperture tube having an aperture of 100 $\mu$m by a pore electrical resistance method is used. Setting of measurement conditions and analysis of measurement data are performed using the dedicated software "Beckman Coulter Multisizer 3 Version 3.51" (manufactured by Beckman Coulter, Inc.) attached to the device. The measurement is performed with an effective measurement channel number of 25,000 channels.

As an electrolyte aqueous solution used for the measurement, one obtained by dissolving special grade sodium chloride in ion-exchanged water so that the concentration is 1% by mass, for example, "ISOTON II" (manufactured by Beckman Coulter, Inc.) can be used. Prior to measurement and analysis, set the dedicated software as follows. On the "Change Standard Measurement Method (SOM)" screen of the dedicated software, set the total count number in the control mode to 50000 particles, set the number of measurements to 1, and set the value obtained using "Standard Particles 10.0 $\mu$m" (manufactured by Beckman Coulter, Inc.) as the Kd value. By pressing the "Measurement button for threshold / noise level," the threshold and noise level are automatically set. Also, set the current to 1600 $\mu$A, the gain to 2, the electrolyte to ISOTON II, and check "Flash aperture tube after measurement." On the "Conversion setting from pulse to particle size" screen of the dedicated software, set the bin interval to logarithmic particle size, the particle size bin to 256 particle size bins, and the particle size range from 2 $\mu$m to 60 $\mu$m. The specific measurement method is as follows.

(1) 200 mL of electrolyte aqueous solution is put into a 250mL glass round bottom beaker dedicated for Multisizer 3 and set on a sample stand, and stirred counterclockwise at 24 revolutions/second with a stirrer rod. Then, dirt and air bubbles in the aperture tube are removed using the "Flash aperture tube" function of the dedicated software.

(2) 30 mL of electrolyte aqueous solution is put into a 100 mL glass flat bottom beaker. To this is added 0.3 mL of a dilution obtained by diluting "Contaminon N" (a 10 mass% aqueous solution of pH 7 precision measuring instrument cleaning neutral detergent consisting of nonionic surfactant, anionic surfactant, and an organic builder, manufactured by Wako Pure Chemical Industries) 3 times by mass with ion-exchanged water.

(3) Prepare an ultrasonic dispersion system "Ultrasonic Dispersion System Tetora 150" (manufactured by Nikkaki Bios, Co., Ltd.) with a built-in two oscillators having an oscillation frequency of 50 kHz shifted in phase by 180 degrees and an electrical output of 120 W. Put 3.3L of ion-exchanged water in the water tank of the ultrasonic disperser and add 2mL of Contaminon N thereto.

(4) Set the beaker of (2) above in the beaker fixing hole of the ultrasonic disperser described above, operate the ultrasonic disperser. Then, adjust the height position of the beaker so that the resonance state of the liquid surface of the electrolyte aqueous solution in the beaker becomes maximum.

(5) With ultrasonic waves applied to the electrolyte aqueous solution in the beaker of (4) above, add the toner or paste little by little so that it becomes 10 mg, disperse it in the electrolyte aqueous solution, and further ultrasonically disperse it for 60 seconds. When dispersing with ultrasonic waves, the water temperature in the water tank is appropriately adjusted to be 10°C or higher and 40°C or lower.

(6) Using a pipette, the electrolyte aqueous solution in (5) above with dispersed toner or powder adhesive is added dropwise to the round bottom beaker in (1) placed in the sample stand so that the measurement concentration is adjusted to 5%. Then, the measurement is performed until the number of measured particles reaches 50000.

(7) The measurement data is analyzed by the dedicated software attached to the device to calculate the weight average particle diameter.

(Identifying where the toner and paste are mixed)

Next, the location where the toner and paste are mixed was identified in the state where the above-mentioned peeling offset occurs.

In the image forming process, the steps in which the toner and paste exist as powders are any of the developing step of developing from the developer carrying member to the drum, the primary transfer step of transferring from the drum to the ITB, and the secondary transfer step of transferring from the ITB to the paper. By forcibly stopping the main body drive and the like, it was found that mixing occurred in the primary transfer step as shown in FIG. 9C. In this step, both the paste 2 and the toner 8 are transferred onto the ITB 3, and are mixed at this point.

FIG. 10A is a diagram schematically showing the state before the transfer pressure is applied, and the toner and paste are carried regularly on the drum in accordance with the print pattern. However, when the transfer pressure is applied, as shown in FIG. 10B, paste particles larger by about 25 $\mu$m than the toner disturb the toner image on the drum, and it can be confirmed that the toner infiltrates into the paste particles of a larger diameter. This is considered to be because larger particles with larger particle diameters are difficult to move due to their heavier weight, and lighter smaller particles move to enter the gaps. When this state occurs on the ITB, when secondary transfer is performed to the paper, the paste layer overlaps on the disturbed toner layer on the paper, and the particles of both are further mixed. Then, as shown in FIG. 11A, the toner is fixed in positions different from normal during fixing in an isolated manner, and as shown in FIG. 11B, when the paper 4 is peeled off after press-bonding, the isolated toner is peeled off together with the paste, which has been found to be the cause of peeling offset.

On the other hand, when the average particle diameter of the toner and the paste is the same, there are many contact points between the layers at the timing when they are mixed with each other, and the transfer pressure can be absorbed by the surface on the ITB. Therefore, it is considered that peeling offset did not occur.

In the case where the average particle diameter of the paste is about 25 $\mu$m larger than that of the toner, and there are many particles having a smaller particle diameter than the average particle diameter of the paste (the paste has a wider particle size distribution, or a larger half width in the particle size distribution, than the toner), as shown in FIG. 12A, small paste particles having a smaller particle size than the large paste particles have already entered and filled the gaps between the large paste particles on the ITB. Therefore, even when the toner is transferred from the drum to the ITB at the downstream stations in the image formation and the transfer pressure is applied, the toner can be prevented from entering the gaps of the large paste particles as shown in FIG. 12B, suppressing the mixing of the toner and paste on the ITB. Then, it has been found that as shown in FIG. 13A, the toner and paste are not mixed with each other during fixing, and are fixed while maintaining the layers of each other, and as shown in FIG. 13B, when the paper 4 is peeled off after press-bonding, the toner and paste are peeled off without disturbing the interface, and peeling offset does not occur.

In addition to the above combination of toner and paste, other combinations as shown in Table 3 can be considered. From Table 3, it can be seen that peeling offset occurs in the combination of small toner average particle diameter and large paste average particle diameter, and peeling offset suppression is improved with a larger particle size distribution than with a smaller particle size distribution. In particular, it can be seen that the effect of the large particle size distribution of the paste is large.

However, since the data in parentheses contribute less to peeling offset, this example focuses on combinations with a large particle size difference, namely toner with a small average particle size (about 6 $\mu$m), and paste with small (about 6 $\mu$m) and large (about 30 $\mu$m) average particle sizes.

[Table 3]

| | | Paste | | | |
|---|---|---|---|---|---|
| | | Small Avg. Particle Size Small Particle Size Distribution | Small Avg. Particle Size Large Particle Size Distribution | Large Avg. Particle Size Small Particle Size Distribution | Large Avg. Particle Size Large Particle Size Distribution |
| Toner | Small Avg. Particle Size Small Particle Size Distribution | Not Occurred | Not Occurred | Toner is disturbed, and peeling offset occurs. | Not Occurred |
| | Small Avg. Particle Size Large Particle Size Distribution | Not Occurred | Not Occurred | Toner is disturbed, and peeling offset occurs. | Not Occurred |
| | Large Avg. Particle Size Small Particle Size Distribution | Paste is disturbed followed by decreased adhesive strength, and peeling offset occurs very slightly. | Paste is disturbed followed by decreased adhesive strength, and peeling offset occurs very slightly. | Not Occurred | Not Occurred |
| | Large Avg. Particle Size Large Particle Size Distribution | Not Occurred | Not Occurred | Not Occurred | Not Occurred |

Next, the reason why peeling offset suppression is improved by increasing the particle size distribution of the paste will be described. FIGS. 14A and 14B are graphs when there is a large difference in average particle diameter and particle size distribution between the toner and the paste in the upper right corner of Table 3. FIG. 14A shows a large average particle diameter and a large particle size distribution of the paste, and FIG. 14B shows a small average particle diameter and a small particle size distribution of the toner. In this case, since the paste has a wide particle size distribution (that is, the half width of the particle size distribution is large), particles of various paste particle diameters fill the gaps on the ITB at the most upstream in the image forming process to form a smooth surface before the toner is printed in the next station. In particular, since the gaps are filled with paste with a smaller average particle size as small as that of the toner particles, if the particle size distribution of the paste can be widened to be wider than that of the toner, i.e., if more particles close to the particle size of the other side are present in advance, they are less likely to mix with each other and thus peeling offsets can be controlled.

Next, the reason why peeling offset improves when the threshold value of the average particle diameter difference between the toner and the paste is smaller than 25 $\mu$m will be described. FIGS. 15A and 15B are schematic diagrams showing the extent to which toner particles can infiltrate into the gaps of 30 $\mu$m paste, which is the maximum average particle diameter, (the view is from the plane side of the ITB surface, not the cross-sectional side).

From FIG. 15A, when the toner is 5 $\mu$m and the paste is 30 $\mu$m, and the average particle diameter difference is 25 $\mu$m, the toner infiltrates into the paste gaps while in contact with them, making it easier for the powders to mix with each other, resulting in worse peeling offset. On the other hand, from FIG. 15B, when the toner is 6 $\mu$m and the paste is 30 $\mu$m, and the average particle diameter difference is 24 $\mu$m, it becomes physically difficult for the toner to infiltrate into the gaps of the paste, making it difficult for the powders to mix with each other. As a result, peeling offset can be suppressed.

Table 4 shows the relationship between the particle diameter difference and peeling offset.

[Table 4]

| Toner Particle Diameter (μm) | Paste Particle Diameter (μm) | Particle Diameter Difference (μm) | Infiltration into Gaps | Peeling Offset |
|---|---|---|---|---|
| 5 | 30 | 25 | Yes | Occurred |
| 6 | 30 | 24 | No | Non Occurred |

For the numerical values in Table 4, since the electrophotographic image forming process is used for both the toner and the paste, the average particle diameter in this case assumes a maximum of 30 μm. Therefore, even if the average particle diameters of the toner and paste change, they are similar to the numerical values in Table 4, so that the situation where infiltration is easiest is when the average particle diameter is 30 μm at maximum, that is, the most severe situation is when the average particle diameter difference in Table 4 is 25 μm. Therefore, it has been found that peeling offset can be suppressed by making the difference in average particle diameter smaller than 25 μm.

From the above, with respect to the average particle diameter and particle size distribution of the toner and paste, it has become clear that peeling offset suppression is improved when the difference in average particle diameter between the toner and paste is less than 25 μm and the paste has a larger particle size distribution, that is, a larger half width, than that of the toner.

<Summary>

The advantages of the present invention examples are shown in Table 5.

[Table 5]

| Configuration | Relationship between Toner and Paste | Peeling Offset | Image Quality of Peeled Surface (Improvement in Glossiness) |
|---|---|---|---|
| Example 1 | SP Value Difference $\geq$ 1.0 | Not Occurred | Good |
| Example 2 | Has Difference in Viscoelasticity | Not Occurred | Good |
| Example 3 | Particle Diameter Difference < 25 $\mu$m, Particle Size Distribution: Paste > Toner | Not Occurred | Good |
| Example 4 | Satisfies Configurations of All Examples 1 to 3 | Not Occurred | Excellent |

In this case, the SP value difference between the toner and the paste is set to 1.0 $(cal/cm^3)^{1/2}$ or more so that the toner and the paste are less likely to be compatible even in a molten state. Further, by giving a difference in viscoelastic properties between the toner and the paste during fixing, it is possible to avoid the two powders from melting at once, and to make them less compatible even in a state where the molten state and powder state are mixed. Further, by making the particle size distribution of the paste larger than that of the toner with the average particle diameter difference between the toner and the paste being less than 25 $\mu$m, the small particles of the paste enter the gaps of the large particles of the paste in advance to form a smooth surface. Since it can be made difficult to mix even in a powdery state, peeling offset can be favorably suppressed. In addition, the image quality and gloss of the peeled surface are improved (and the adhesive strength is partially improved).

By combining all of the above configurations, that is, the SP value difference, viscoelastic difference, average particle diameter, and particle size distribution difference, the image quality and gloss (adhesion strength) of the peeled surface can be further improved while suppressing peeling offset.

The present invention is not limited to the above examples, and various changes and modifications can be made without departing from the spirit and scope of the present invention. Therefore, the following claims are appended to publicly disclose the scope of the present invention.

This application claims the benefit of Japanese Patent Application No. 2021-160246, filed September 30, 2021, and Japanese Patent Application No. 2022-147741, filed September 16, 2022, which are hereby incorporated by reference herein in their entirety.

[Reference Signs List]

1 Image bearing member (drum: 1st station)
2 Powder adhesive (paste)
3 Intermediate transfer belt (ITB)
4 Recording material (paper)
5 Fixing unit
6 Folding unit
7 Press-bonding unit
8 Toner (Y: yellow)
9 Toner (M: magenta)
10 Toner (C: cyan)
11 Image bearing member (drum: 2nd station)
12 Charging roller
13 Cleaning container
14 Transfer roller
15 Secondary transfer roller
16 Laser beam scanner
17 Developing agent carrying member

**Claims**

1. A method for manufacturing a press-bonded sheet in which sheet portions are press-bonded in a peelable state, comprising:

   a step of forming a composite layer by laminating an adhesive layer formed using a powder adhesive as a surface layer on a toner image formed using a printing toner on a sheet;
   a fixing step of heating the composite layer formed on the sheet to fix it to the sheet;
   a step of superimposing by opposing an area of the sheet where the composite layer is fixed and an area of the same sheet or a different sheet where another composite layer is fixed; and
   a press-bonding step of press-bonding the superimposed portion of the composite layer and the other composite layer by pressing under heat,
   wherein a difference in solubility parameter (SP value) between the printing toner and the powder adhesive is 1.0 $(cal/cm^3)^{1/2}$ or more.

2. The method for manufacturing a press-bonded sheet according to claim 1, wherein the powder adhesive contains low-density polyethylene.

3. An image forming apparatus for manufacturing a press-bonded sheet in which sheet portions are press-bonded in a peelable state, comprising:

means for forming a composite layer by laminating an adhesive layer formed using a powder adhesive as a surface layer on a toner image formed using a printing toner on a sheet;
fixing means for heating the composite layer formed on the sheet to fix it to the sheet;
means for superimposing by opposing an area of the sheet where the composite layer is fixed and an area of the same sheet or a different sheet where another composite layer is fixed; and
press-bonding means for press-bonding the superimposed portion of the composite layer and the other composite layer by pressing under heat,
wherein a difference in solubility parameter (SP value) between the printing toner and the powder adhesive is 1.0 $(cal/cm^3)^{1/2}$ or more.

4. The image forming apparatus according to claim 3, wherein the powder adhesive contains low-density polyethylene.

5. A method for manufacturing a press-bonded sheet in which sheet portions are press-bonded in a peelable state, comprising:

a step of forming a composite layer by laminating an adhesive layer formed using a powder adhesive as a surface layer on a toner image formed using a printing toner on a sheet;
a fixing step of heating the composite layer formed on the sheet to fix it to the sheet;
a step of superimposing by opposing an area of the sheet where the composite layer is fixed and an area of the same sheet or a different sheet where another composite layer is fixed; and
a press-bonding step of press-bonding the superimposed portion of the composite layer and the other composite layer by pressing under heat,
wherein the printing toner contains wax,
when a storage elastic modulus of the printing toner at a temperature in the fixing step is defined as G'(A1), a storage elastic modulus of the printing toner at a temperature in the press-bonding step is defined as G'(A2), a storage elastic modulus of the powder adhesive at a temperature in the fixing step is defined as G'(B 1), and a storage elastic modulus of the powder adhesive at a temperature in the press-bonding step is defined as G'(B2), the following relation is satisfied:

$$G'(A1) > G'(A2)$$

$$G'(B1) > G'(B2)$$

$$G'(B1) > G'(A1),$$

and
the temperature in the fixing step is a temperature between a starting onset temperature and an ending onset temperature of a change region caused by melting in a storage elastic modulus curve of the powder adhesive.

6. The method for manufacturing a press-bonded sheet according to claim 5, wherein the powder adhesive contains low-density polyethylene.

7. A method for manufacturing a press-bonded sheet in which sheet portions are press-bonded in a peelable state, comprising:

a step of forming a composite layer by laminating an adhesive layer formed using a powder adhesive as a surface layer on a toner image formed using a printing toner on a sheet;
a fixing step of heating the composite layer formed on the sheet to fix it to the sheet;
a step of superimposing by opposing an area of the sheet where the composite layer is fixed and an area of the same sheet or a different sheet where another composite layer is fixed; and

a press-bonding step of press-bonding the superimposed portion of the composite layer and the other composite layer by pressing under heat,

wherein a difference in average particle diameter between the toner and the powder adhesive is smaller than 25 $\mu$m, and the powder adhesive has a wider particle size distribution, or a larger half width, than the toner.

8. The method for manufacturing a press-bonded sheet according to claim 7, wherein the powder adhesive contains low-density polyethylene.

9. An image forming apparatus for manufacturing a press-bonded sheet in which sheet portions are press-bonded in a peelable state, comprising:

means for forming a composite layer by laminating an adhesive layer formed using a powder adhesive as a surface layer on a toner image formed using a printing toner on a sheet;

fixing means for heating the composite layer formed on the sheet to fix it to the sheet;

means for superimposing by opposing an area of the sheet where the composite layer is fixed and an area of the same sheet or a different sheet where another composite layer is fixed; and

press-bonding means for press-bonding the superimposed portion of the composite layer and the other composite layer by pressing under heat,

wherein a difference in average particle diameter between the toner and the powder adhesive is smaller than 25 $\mu$m, and the powder adhesive has a wider particle size distribution, or a larger half width, than the toner.

10. The image forming apparatus according to claim 9, wherein the powder adhesive contains low-density polyethylene.

FIG. 1

FIG. 2A

FIG. 2B

# FIG. 3

# FIG. 4

# FIG. 5

# FIG. 6

# FIG. 7

# FIG. 8

# FIG. 9A

FIG. 9B

FIG. 9C

# FIG. 9B

3

2

1

# FIG. 9C

3

2

8

11

# FIG. 10A

# FIG. 10B

## FIG. 11A

## FIG. 11B

FIG. 12A

FIG. 12B

## FIG. 13A

## FIG. 13B

## FIG. 14A

NUMBER-BASED FREQUENCY

PARTICLE DIAMETER (μm)

## FIG. 14B

NUMBER-BASED FREQUENCY

PARTICLE DIAMETER (μm)

# FIG. 15A

30 µm

5 µm

30 µm          30 µm

# FIG. 15B

30 µm

6 µm

30 µm          30 µm

## INTERNATIONAL SEARCH REPORT

| International application No. |
| --- |
| **PCT/JP2022/035835** |

**A. CLASSIFICATION OF SUBJECT MATTER**

*C09J 123/06*(2006.01)i; *G03G 9/08*(2006.01)i; *G03G 9/097*(2006.01)i; *G03G 15/24*(2006.01)i
FI: G03G9/08 391; G03G9/097 365; G03G15/24; C09J123/06

According to International Patent Classification (IPC) or to both national classification and IPC

**B. FIELDS SEARCHED**

Minimum documentation searched (classification system followed by classification symbols)

G03G9/00-G03G9/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-149638 A (CASIO ELECTRONICS CO LTD) 03 July 2008 (2008-07-03) paragraphs [0035]-[0065] | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2022** | **06 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/035835** |

**Box No. III     Observations where unity of invention is lacking (Continuation of item 3 of first sheet)**

This International Searching Authority found multiple inventions in this international application, as follows:

Document 1: JP 2008-149638 A (カシオ電子工業株式会社) 03 July 2008 (2008-07-03) paragraphs [0035]-[0065] (Family: none)

(Invention 1) Claims 1-4
   Claims 1-4 have the special technical feature in which a "difference of the solubility parameter (SP value) between the print toner and the powdery adhesive is equal to or greater than 1.0 $(cal/cm^3)^{1/2}$," and are thus classified as invention 1.

(Invention 2) Claims 5-6
   Claims 5-6 share, with claims 1-4 classified as invention 1, the common technical feature of a "pressure-bonded sheet manufacturing method for manufacturing a pressure-bonded sheet formed by pressure-bonding sheets in a peelable state, the method comprising: a step for forming, on a sheet, a composite layer formed by laminating, on a toner image formed by a print toner, adhesive layers formed by using a powdery adhesive as a surface layer; a fixing step for heating the composite layer formed on the sheet to fix the composite layer to the sheet; a step for overlapping a region in which the composite layer on the sheet is fixed and a region in which another composite layer on the same sheet or a different sheet is fixed by making the regions opposed to each other; and a pressure-bonding step for pressing and press-bonding a portion in which the composite layer and said another composite layer are overlapped each other while heating." However, said technical feature does not make a contribution over the prior art in light of the disclosure of document 1, and thus cannot be said to be a special technical feature.
   The special technical feature set forth in claims 1-4 in which a "difference of the solubility parameter (SP value) between the print toner and the powdery adhesive is equal to or greater than 1.0 $(cal/cm^3)^{1/2}$" is the feature focusing on that "toner and a adhesive can be made hardly compatible with each other even in a molten state" as described in paragraph [0108] of the present application, but the special technical feature set forth in claims 5-6 in which the "print toner contains wax, when a storage elastic modulus at a temperature in the step for fixing the print toner is defined as G'(A1), a storage elastic modulus at a temperature in the pressure-bonding step is defined as G'(A2), a storage elastic modulus at a temperature in the step for fixing the powdery adhesive is defined as G'(B1), and a storage elastic modulus at a temperature in the pressure-bonding step is defined as G'(B2), G'(A1) > G'(A2), G'(B1) > G'(B2), and G'(B1) > G'(A1) are satisfied, and the temperature in the fixing step is a temperature between a start point onset temperature and an end point onset temperature of a change region, which is generated by melting in a storage elastic modulus curve of the powdery adhesive" is the feature focusing on that "by making viscoelasticity properties of toner and an adhesive at the time of fixing be different, both the powders are prevented from being molten at the same time, and both the powders can be made hardly compatible with each other even in a state in which a molten state and a powder state coexist," as described in paragraph [0108] of the present application, and thus both the special technical features have little relevancy with each other.
   Claims 5-6 are not dependent on claims 1-4. Claims 5-6 are not substantially identical to or similarly closely related to any of the claims classified as invention 1.
   Therefore, claims 5-6 cannot be classified as invention 1.
   Claims 5-6 are classified as invention 2.

(Invention 3) Claims 7-10
   Claims 7-10 share, with claims 1-4 classified as invention 1, the common technical feature of a "pressure-bonded sheet manufacturing method for manufacturing a pressure-bonded sheet formed by pressure-bonding sheets in a peelable state, the method comprising: a step for forming, on a sheet, a composite layer formed by laminating, on a toner image formed by a print toner, adhesive layers formed by using a powdery adhesive as a surface layer; a fixing step for heating the composite layer formed on the sheet to fix the composite layer to the sheet; a step for overlapping a region in which the composite layer on the sheet is fixed and a region in which another composite layer on the same sheet or a different sheet is fixed by making the regions opposed to each other; and a pressure-bonding step for pressing and press-bonding a portion in which the composite layer and said another composite layer are overlapped each other while heating." However, said technical feature does not make a contribution over the prior art in light of the disclosure of document 1, and thus cannot be said to be a special technical feature.
   The special technical feature set forth in claims 1-4 in which a "difference of the solubility parameter (SP value) between the print toner and the powdery adhesive is equal to or greater than 1.0 $(cal/cm^3)^{1/2}$" is the feature focusing on that "toner and a adhesive can be made hardly compatible with each other even in a molten state" as described in paragraph [0108] of the present application, but the special technical feature set forth in claims 7-10 in which a "difference of an average particle diameter between the toner and the powdery adhesive is smaller than 25 μm,

Form PCT/ISA/210 (continuation of first sheet) (January 2015)

## INTERNATIONAL SEARCH REPORT

| International application No. |
|---|
| **PCT/JP2022/035835** |

| **Box No. III** | **Observations where unity of invention is lacking (Continuation of item 3 of first sheet)** |
|---|---|

a particle size distribution of the powdery adhesive is larger than that of the toner or a half width of the powdery adhesive is larger than that of the toner" is the feature focusing that a "smooth surface can be formed when small particles of the adhesive enter a gap between large particles of the adhesive in advance, and thus the particles can be made hardly be mixed with each other even in a powder state," as described in paragraph [0108] of the present application, and thus both the special technical features have little relevancy with each other.

Claims 7-10 are not dependent on claims 1-4. Claims 7-10 are not substantially identical to or similarly closely related to any of the claims classified as invention 1 or invention 2.

Therefore, claims 7-10 cannot be classified as either invention 1 or invention 2.

Claims 7-10 are classified as invention 3.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☑ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/035835**

| Patent document cited in search report | Publication date (day/month/year) | Patent family member(s) | Publication date (day/month/year) |
|---|---|---|---|
| JP 2008-149638 A | 03 July 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007045861 A
- JP 2021160246 A
- JP 2022147741 A

**Non-patent literature cited in the description**

- Coating no Kiso Kagaku (Fundamentals of Coating Science. Maki Shoten Publishing, 1986, 54-57